# EUROPÄISCHE PATENTSCHRIFT

(11) **EP 3 612 415 B1**
(45) Veröffentlichungstag und Bekanntmachung des Hinweises auf die Patenterteilung: **09.06.2021**
(21) Anmeldenummer: 18718141.7
(22) Anmeldetag: 13.04.2018
(51) Int. Cl.: B60R 13/08

(54) **SCHALLISOLATIONSELEMENT FÜR DIE STIRNWAND EINER FAHRZEUGKAROSSERIE**
NOISE INSULATION ELEMENT FOR THE BULKHEAD OF A VEHICLE BODY
ÉLÉMENT D'INSONORISATION POUR LA PAROI FRONTALE D'UNE CARROSSERIE DE VÉHICULE

(30) Priorität: 19.04.2017 DE 102017108308
(43) Veröffentlichungstag der Anmeldung: 26.02.2020
(73) Patentinhaber: Adler Pelzer Holding GmbH, 58099 Hagen (DE)
(72) Erfinder: RIEDERER, Frank, 58455 Witten (DE); KARCZ, Thomas, 44369 Dortmund (DE); SCHULZE, Volkmar, 84069 Schierling (DE); JOHLER, Michael, 72336 Balingen (DE); RIEDISSER, Wolfgang, 71272 Renningen (DE)
(74) Vertreter: Hannke Bittner & Partner
(86) Internationale Anmeldenummer: PCT/EP2018/059557
(87) Internationale Veröffentlichungsnummer: WO 2018/192858

(56) Entgegenhaltungen:
- DE-A1- 2 526 325
- DE-T2- 69 716 078
- DE-U1-202004 008 165
- DE-U1-202005 007 646
- FR-A1- 2 935 038
- US-A- 5 557 078

## Beschreibung

Die Erfindung betrifft ein Schallisolationselement für die Stirnwand einer Fahrzeugkarosserie.

Es ist grundsätzlich bekannt, an der Innenseite der Stirnwand einer Fahrzeugkarosserie, also an der Innenseite der Wand zwischen Fahrgastzelle und Motorraum ein Schallisolationselement anzuordnen. Ein Beispiel für eine derartige Stirnwandisolation ist in DE-B-10 2009 006 989 beschrieben.

Ein weiteres schallisolierendes Bauteil zur Fixierung an der Stirnwand einer Fahrzeugkarosserie ist in der DE-U-20 2005 007646 und in der DE-U-20 2004 008 165 beschrieben.

Die Montage derartiger Schallisolationselemente an Fahrzeugkarosserien erfolgt im Stand der Technik mittels Bolzen, Schrauben, Klemmscheiben, Clipse o.dgl. Befestigungselemente, was sich nachteilig hinsichtlich der Gestehungskosten und des Montageaufwands auswirkt.

Aufgabe der Erfindung ist es daher, ein Schallisolationselement für die Stirnwand einer Fahrzeugkarosserie anzugeben, bei dem zumindest an einigen Fixierpunkten keine zusätzlichen Befestigungselemente benötigt werden, so dass sich die Montage vereinfacht.

Zur Lösung dieser Aufgabe wird mit der Erfindung ein Schallisolationselement für die Stirnwand einer Fahrzeugkarosserie vorgeschlagen, wobei das Schallisolationselement versehen ist mit den Merkmalen des Anspruchs 1. Einzelne Ausgestaltungen der Erfindung sind Gegenstand der Unteransprüche. Erfindungsgemäß weist das Schallisolationselement einen integral ausgebildeten Fixiervorsprung auf. Statt eines derartigen Fixiervorsprungs können auch mehrere solcher Fixiervorsprünge vorgesehen sein. Vorteilhaft ist es, wenn diese Fixiervorsprünge in denjenigen Bereichen des Schallisolationselements angeordnet sind, in denen dieses an der A-Säule der Fahrzeugkarosserie fixiert ist.

Das erfindungsgemäße Schallisolationselement weist einen mehrschichtigen Aufbau auf und ist, wie an sich bekannt, als Masse-Feder-Element ausgeführt, das eine Kunststoff-Trägerschicht als sogenannte Schwer- bzw. Masseschicht aufweist und zusätzlich mit einer Schalldämpfungsschicht (auch als Federschicht bezeichnet) aus schalldämpfenden Material versehen ist.

Bei dem erfindungsgemäßen Schallisolationselement ist an der Rückseite der Kunststoff-Trägerschicht mindestens ein hohler Fixiervorsprung integral ausgebildet. Dieser hohle Fixiervorsprung ist gebildet aus einer Seitenwand, die längs des Randes einer Aussparung der Trägerschicht verläuft. Die Seitenwand des Fixiervorsprungs ragt also von der Rückseite der Trägerschicht ab. Die Seitenwand weist auf ihrer Außenseite eine Außenaufnahmenut auf, die dann, wenn der Fixiervorsprung in eine Aufnahmeöffnung der Fahrzeugkarosserie eingeführt ist, den Öffnungsrand der Aufnahmenut umgreift.

Durch die erfindungsgemäße Ausgestaltung des Fixiervorsprungs lässt sich die Seitenwand in zumindest zwei gegenüberliegenden Abschnitten stauchen, was zwecks Verringerung der Breiten- und/oder Längenerstreckung des Fixiervorsprungs ein Aufeinanderzubewegen der gegenüberliegenden Seitenwandabschnitte erlaubt, so dass der Fixiervorsprung in die Aufnahmeöffnung der Fahrzeugkarosserie einführbar und die Aufnahmenut der Seitenwand des Fixiervorsprungs den Öffnungsrand der Aufnahmeöffnung der Fahrzeugkarosserie umgreift.

Der Fixiervorsprung bzw. jeder Fixiervorsprung des Masse-Feder-Elements des erfindungsgemäßen Schallisolationselements wird nun in eine ihm zugeordnete Aufnahmeöffnung der Fahrzeugkarosserie hineingedrückt, wobei sich der Fixiervorsprung wegen der rückstellfähigen Kunststoff-Trägerschicht selbsttätig wieder aufstellt, wenn die Seitenwand des Fixiervorsprungs vollständig in die Aufnahmeöffnung der Fahrzeugkarosserie eingeführt ist. Die Außenaufnahmenut der Seitenwand umgreift dann den Öffnungsrand der Aufnahmeöffnung in der Fahrzeugkarosserie und fixiert somit das Schallisolationselement.

Bei der Erfindung ist ferner vorgesehen, dass die Bodenwand des Fixiervorsprungs eine Bodenwandöffnung aufweist, die sich bis in zumindest zwei gegenüberliegende Abschnitte der Seitenwand des Fixiervorsprungs hinein erstreckt, und dass die Bodenwandöffnung des Fixiervorsprungs eine durch einen Ausnehmungsrand begrenzte Leitungsausnehmung zur Hindurchführung einer Leitung, insbesondere einer Hydraulik- und/oder einer elektrischen Leitung durch das Masse-Feder-Element definiert, wobei der Ausnehmungsrand der Leitungsausnehmung zur Anlage an der Leitung und damit zur Aufrechterhaltung der Form und Stabilisierung der Bodenwandöffnung und der Leitungsausnehmung vorgesehen ist. Bei dieser Ausgestaltung der Erfindung wird der Fixiervorsprung für die Durchführung einer Leitung genutzt. Hierzu weist der Fixiervorsprung eine Bodenwand mit einer Öffnung auf, in der wiederum eine Leitungsausnehmung ausgebildet ist, die, wenn eine Leitung durch die Bodenwandöffnung hindurchgeführt ist, in Anlage mit der Leitung gelangt, so dass die Leitung die Bodenwand stabilisiert, so dass sie ein unbeabsichtigtes Aufeinanderzubewegen gegenüberliegender Seitenwandabschnitte zusätzlich verhindert. Damit ist die Fixierung des Schallisolationselements sicherer.

In vorteilhafter Ausgestaltung der Erfindung kann die Seitenwand an ihrem der Trägerschicht abgewandten Ende eine Bodenwand tragen. Diese Bodenwand ist einstückig mit der Seitenwand verbunden, so dass sich der Fixiervorsprung sozusagen als Napf der Trägerschicht darstellt. Die Bodenwand stabilisiert die Seitenwand des Fixiervorsprungs, wenn dieser sich bei vollständiger Einführung in die Aufnahmeöffnung der Fahrzeugkarosserie wieder aufgestellt hat. Die Bodenwand sollte stauchbar ausgeführt sein, was zweckmäßigerweise auch für die Seitenwand des Fixiervorsprungs gilt. Dies erleichtert den Vorgang des Aufeinanderzubewegens gegenüberliegender Seitenwandabschnitte und damit die Verringerung der Breiten- oder Längenerstreckung des Fixiervorsprungs, wenn dieser in die Aufnahmeöffnung der Fahrzeugkarosserie hineingedrückt wird.

In weiterer vorteilhafter Ausgestaltung der Erfindung kann vorgesehen sein, dass der Ausnehmungsrand der Leitungsausnehmung in der Bodenwand des Fixiervorsprungs zwecks Scheuerschutz für eine Leitung mit Schalldämpfungsmaterial versehen und insbesondere in Schalldämpfungsmaterial eingebettet ist.

In weiterer vorteilhafter Ausgestaltung der Erfindung kann vorgesehen sein, dass sich die Schalldämpfungsschicht bis in die Außenaufnahmenut der Seitenwand erstreckt. Dies sorgt für eine des Weiteren verbesserte Fixierung des Fixiervorsprungs in der Aufnahmeöffnung der Fahrzeugkarosserie.

In weiterer zweckmäßiger Ausgestaltung der Erfindung kann vorgesehen sein, dass die Bodenwand des Fixiervorsprungs eine Bodenwandöffnung aufweist, die sich bis in zumindest zwei gegenüberliegende Abschnitte der Seitenwand des Fixiervorsprungs hinein erstreckt, und dass die Bodenwandöffnung als Langloch, insbesondere als Schlitz oder Spalt ausgebildet ist. Dadurch, dass die Bodenwand mit einer Bodenwandöffnung versehen ist, lässt sich der Fixiervorsprung einfach in seiner Breiten- bzw. Längenerstreckung verkürzen, was für das Einführen des Fixiervorsprungs in die Aufnahmeöffnung der Fahrzeugkarosserie von Vorteil ist. Eine ansonsten stauchbar ausgeführte Bodenwand kann beispielsweise sich über die Bodenwand hinweg bis in die Seitenwände erstreckende streifen- bzw. linienförmige Verdünnungsbereiche aufweisen, die ein Stauchen bzw. Falten der Bodenwand erlauben.

In weiterer zweckmäßiger Ausgestaltung der Erfindung kann vorgesehen sein,
- dass die eine Flanke der Außenaufnahmenut der Seitenwand des Fixiervorsprungs durch den an die Aussparung der Trägerschicht angrenzenden Abschnitt der Rückseite der Trägerschicht und/oder durch gegebenenfalls dort vorhandenes Schalldämpfungsmaterial gebildet ist,
- dass die Außenaufnahmenut einen Nutgrund aufweist, der von einem von der Rückseite der Trägerschicht aufragenden ersten Bereich der Seitenwand gebildet ist, und
- dass die der besagten einen Flanke gegenüberliegende andere Flanke der Außenaufnahmenut durch einen nach außen verlaufenden Abschnitt der Seitenwand gebildet ist,
- wobei sich an diesen Abschnitt der Seitenwand ein von diesem Abschnitt abstehender sowie von der Rückseite der Trägerschicht weg gerichteter weiterer Abschnitt der Seitenwand anschließt, der in die Bodenwand des Fixiervorsprungs übergeht.

Wie sich aus dem Vorstehenden ergibt, ist die Seitenwand des Fixiervorsprungs (im Querschnitt betrachtet) zur Ausbildung der Außenaufnahmenut vorteilhafterweise S-förmig ausgestaltet.

Bei einer weiteren zweckmäßigen Ausgestaltung der Erfindung ist vorgesehen, dass die Bodenwand des Fixiervorsprungs eine Bodenwandöffnung aufweist, die sich bis in mindestens drei versetzt zueinander angeordnete Abschnitte der Seitenwand und insbesondere in vier um jeweils 90° zueinander versetzt angeordnete Abschnitte der Seitenwand des Fixiervorsprungs hinein erstreckt.

Die vorstehende Beschreibung der Erfindung umfasst Fixiervorsprünge, deren Seitenwände vollständig um die Aussparung in der Trägerschicht herum verlaufen. Ein derartiger Fixiervorsprung sollte letztendlich längs zweier orthogonal zueinander verlaufender Richtungen stauchbar sein, um bequem in die Aufnahmeöffnung der Fahrzeugkarosserie hineingedrückt werden zu können.

Es kann aber auch von Vorteil sein, den Fixiervorsprung an einen Außenbegrenzungsrandabschnitt der Trägerschicht angrenzend vorzusehen. In diesem Fall ist die Aussparung in der Trägerschicht als Randaussparung ausgeführt, die zum Außenbegrenzungsrandabschnitt der Trägerschicht hin offen ist. Bei einer vorteilhaften Ausgestaltung der Erfindung ist also vorgesehen, dass die Aussparung der Trägerschicht des Feder-Masse-Elements als zu einem Außenbegrenzungsrandabschnitt der Trägerschicht hin offene Randaussparung mit einem Aussparungsrand ausgebildet ist, wobei die von der Rückseite der Trägerschicht aufragende Seitenwand an dem Außenbegrenzungsrandabschnitt der Trägerschicht endet. Die Seitenwand des Fixiervorsprungs endet also jeweils am Außenbegrenzungsrandabschnitt, so dass ihr Verlauf längs des Umfangs des Fixiervorsprungs also im Wesentlichen U- bzw. C-förmig ist. An den freien Enden der Seitenwand, wo diese an den Außenbegrenzungsrandabschnitt angrenzt, lässt sich nun der Fixiervorsprung in einfacher Weise komprimieren, um in die Aufnahmeöffnung der Fahrzeugkarosserie eingeführt zu werden.

In weiterer zweckmäßiger Ausgestaltung der Erfindung kann ferner vorgesehen sein, dass die Bodenwand des Fixiervorsprungs eine insbesondere als Schlitz, Spalt oder allgemein formuliert Langloch ausgebildete Bodenwandöffnung aufweist, die sich von dem Außenbegrenzungsrandabschnitt der Trägerschicht bis in zumindest einen Teil des dem Außenbegrenzungsrandabschnitt der Trägerschicht im Wesentlichen gegenüberliegenden Abschnitt der Seitenwand des Fixiervorsprungs erstreckt.

Schließlich ist bei einer weiteren Ausgestaltung der Erfindung vorteilhafterweise vorgesehen, dass die Seitenwand des Fixiervorsprungs in ihrem dem Außenbegrenzungsrandabschnitt der Trägerschicht im Wesentlichen gegenüberliegenden Abschnitt einen Freischnitt (eine Aussparung) aufweist.

Die Erfindung wird nachfolgend anhand zweier Ausführungsbeispiele und unter Bezugnahme auf die Zeichnung näher erläutert. Im Einzelnen zeigen dabei:
- Fig. 1: perspektivisch und in Explosionsdarstellung eine Fahrzeugkarosserie mit Stirnwand-Schallisolationselement,
- Fign. 2 und 3: die Vorder- und die Rückseite des Schallisolationselements gemäß Fig. 1 im Bereich eines ihrer Fixiervorsprünge (siehe den Bereich A der Fig. 1),
- Fig. 4: das an der Fahrzeugkarosserie montierte Schallisolationselement im Bereich des Fixiervorsprungs zur Verdeutlichung des Zusammenwirkens von Fixiervorsprung und Fahrzeugkarosserie zwecks Fixierung des Schallisolationselements,
- Fig. 5: eine Schnittansicht entlang der Linie V-V der Fig. 4 und
- Fign. 6 bis 9: Ansichten entsprechend denjenigen der Fign. 2 bis 5, jedoch für ein Schallisolationselement mit einem vollständig um eine Aussparung herum verlaufenden Fixiervorsprung.

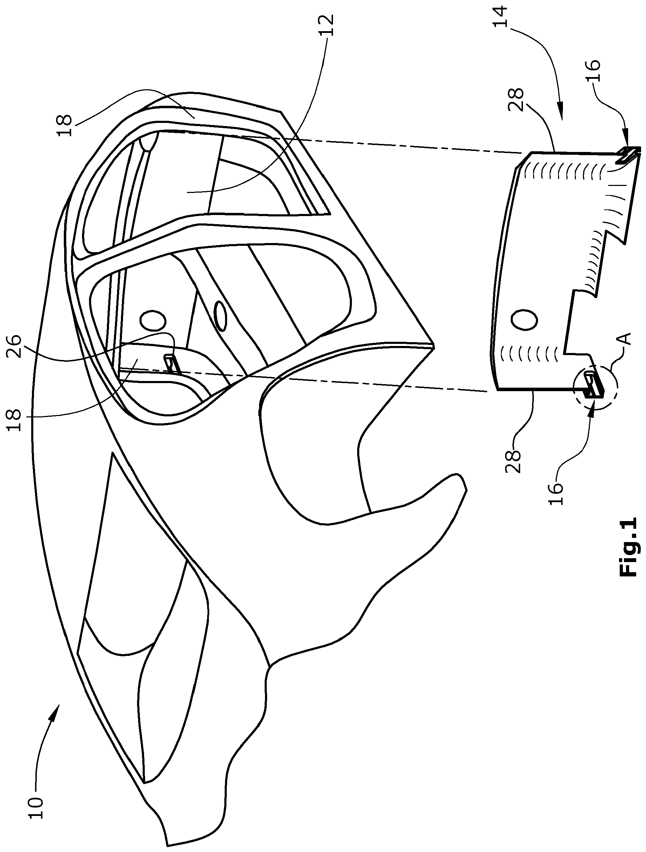

Fig. 1 zeigt schematisch eine Fahrzeugkarosserie 10 mit Stirnwand 12, an der ein Schallisolationselement 14 angeordnet ist. Die Fixierung des Schallisolationselements 14 an der Stirnwand 12 erfolgt zumindest teilweise durch integral mit dem Schallisolationselement 14 ausgebildete Fixiervorsprünge 16, die im montierten Zustand des Schallisolationselements 14 mit jeweils einer Aufnahmeöffnung 26 in der Fahrzeugkarosserie 10 zusammenwirken, in denen die Fixiervorsprünge 16 platziert sind. In diesem Ausführungsbeispiel sind die Aufnahmeöffnungen 26 der Fahrzeugkarosserie 10 im Bereich der A-Säulen 18 ausgebildet.

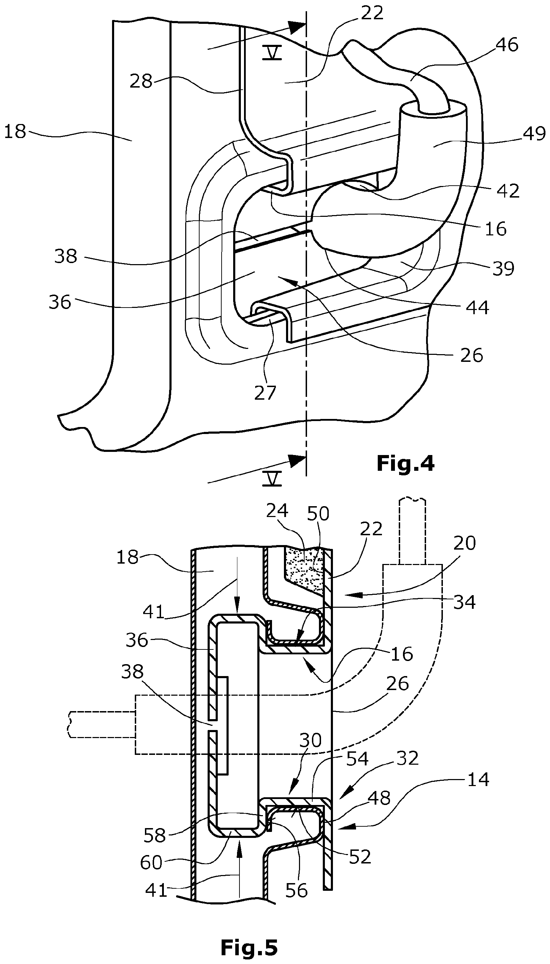

Wie beispielsweise anhand der Fig. 5 zu sehen, weist das Schallisolationselement 14 ein Masse-Feder-(Platten-)Element 20 auf, das eine Kunststoff-Trägerschicht 22 als Schwer- bzw. Masseschicht aus beispielsweise EVA/PE, PE, PP, EPDM, TPE, TPO und/oder Polyurethanschaumstoff, die jeweils mit einem hohen Gewichtsanteil bis zu 70 Gew.-%, eines mineralischen Füllstoffs hoher Dichte, beispielsweise Feldspat, versehen sind, und eine Schalldämpfungsschicht 24 aus einem Schalldämpfungsmaterial (beispielsweise PU-Schaum) aufweist.

In der Kunststoff-Trägerschicht 22 ist eine Aussparung 27 ausgebildet, um die herum sich ein integral ausgebildeter Fixiervorsprung 16 erstreckt. Die Aussparung 27 und der Fixiervorsprung 16 erstrecken sich jeweils bis zum Außenbegrenzungsrandabschnitt 28 des Masse-Feder-Elements 20. Der Fixiervorsprung 16 weist eine Seitenwand 30 auf, die sich längs des Öffnungsrandes 32 der Aussparung 27 erstreckt. Angrenzend an den Öffnungsrand 32 der Aussparung 27 weist die Seitenwand 30 eine Außenaufnahmenut 34 auf. Insgesamt hat die Seitenwand 30 im Schnitt gemäß Fig. 5 betrachtet eine S-förmige Gestalt.

Das der Aussparung 27 der Kunststoff-Trägerschicht 22 abgewandte Ende des Fixiervorsprungs 16 wird in diesem Ausführungsbeispiel von einer Bodenwand 36 gebildet, die eine spalt- bzw. schlitzförmige Bodenwandöffnung 38 aufweist. Diese Öffnung 38 erstreckt sich bis in zwei gegenüberliegende Bereiche 39 der Seitenwand 30 und dient dazu, dass der Fixiervorsprung 16 in Richtung der Pfeile 41 der Fig. 5 stauchbar ist. In dem dem Außenbegrenzungsrandabschnitt 28 abgewandten Bereich 39 weist die Seitenwand 30 einen Freischnitt 40 auf. Damit lässt sich der Fixiervorsprung 16 in die Aufnahmeöffnung 26 der Fahrzeugkarosserie 10 einsetzen. Im eingesetzten Zustand ist zumindest ein Teilabschnitt des Öffnungsrandes 32 der Aufnahmeöffnung 26 in die Außenaufnahmenut 34 der Seitenwand 30 des Fixiervorsprungs 16 eingetaucht.

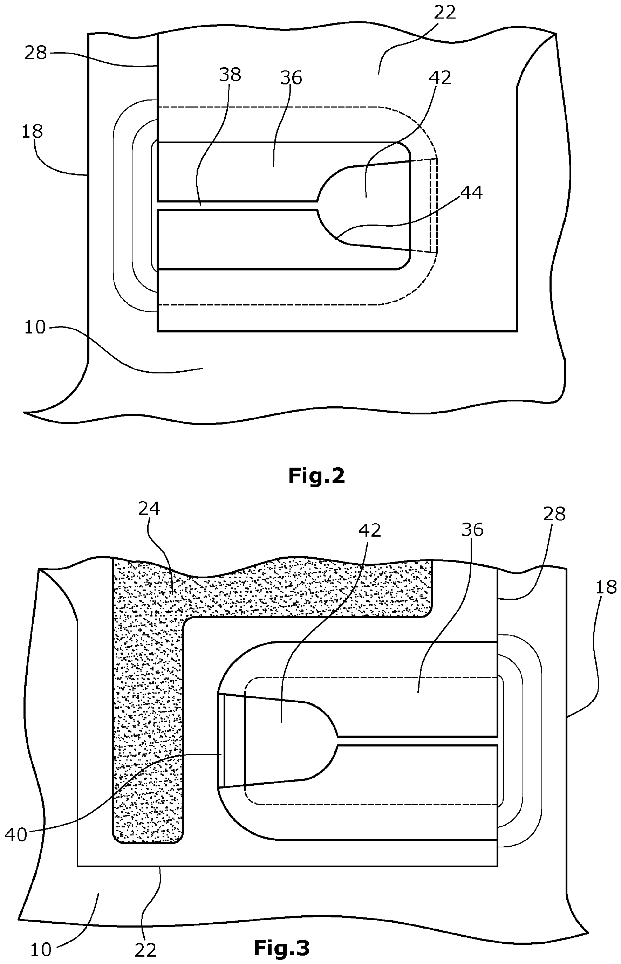

Wie anhand der Fign. 2 bis 5 des Weiteren zu erkennen ist, weist die Bodenwandöffnung 38 eine Leitungsausnehmung 42 auf, die durch einen Ausnehmungsrand 44 definiert ist. In diesem erweiterten Bereich der Bodenwandöffnung 38 lässt sich nun eine Leitung 46, beispielsweise eine Hydraulikleitung oder eine elektrische Leitung durch den Fixiervorsprung 16 hindurchführen. Die Leitung 46 kann eine Außenmanschette 49 aus z. B. geschäumtem Kunststoffmaterial aufweisen, das als Scheuerschutz dient. Alternativ kann der Rand der Bodenwandöffnung 38 längs des Ausnehmungsrandes 44 z. B. umschäumt sein, um auf diese Weise einen Scheuerschutz für die Leitung 46 zu ermöglichen.

Nach der Montage des Schallisolationselements 14 an der Fahrzeugkarosserie 10 kann also durch den Fixiervorsprung 16 eine Leitung 46 hindurchgeführt werden. Die Leitung 46 stabilisiert sozusagen die Bodenwand 36, indem der Ausnehmungsrand 44 der Leitungsausnehmung 42 der Bodenwandöffnung 38 außen an der Leitung 46 bzw. an dem Scheuerschutz (Manschette 48) der Leitung 46 anliegt oder aber indem ein an dem Ausnehmungsrand 44 ausgebildeter Scheuerschutz an der Leitung 46 anliegt. Auf diese Weise hält die Leitung 46 bzw. der Scheuerschutz die Leitungsausnehmung 42 "offen" und damit indirekt den Fixiervorsprung 16 "gespreizt", wie es in Fig. 5 gezeigt ist.

Wie anhand der Fign. 2 bis 5 zu erkennen ist, wird die eine Flanke 48 der Außenaufnahmenut 34 durch den an die Aussparung 27 der Trägerschicht 22 angrenzenden Abschnitt der Rückseite 50 der Trägerschicht 22 bzw. gegebenenfalls durch dort vorhandenes Schalldämpfungsmaterial gebildet. Die Außenaufnahmenut 34 weist einen Nutgrund 52 auf, der von einem von der Rückseite 50 der Trägerschicht 22 aufragenden ersten Bereich 54 der Seitenwand 30 gebildet ist. Der zuvor genannten Flanke 48 gegenüberliegend befindet sich eine zweite Flanke 56 der Außenaufnahmenut 34, die durch einen nach außen verlaufenden Abschnitt 58 der Seitenwand 30 gebildet ist. An diesen Abschnitt 58 schließt sich ein weiterer Abschnitt 60 der Seitenwand 30 an, der in die Bodenwand 36 des Fixiervorsprungs 16 übergeht.

Die Aussparung 27 gemäß den Fign. 2 bis 5 ist als Randaussparung ausgeführt, die zum Außenbegrenzungsrandabschnitt 28 hin offen ist.

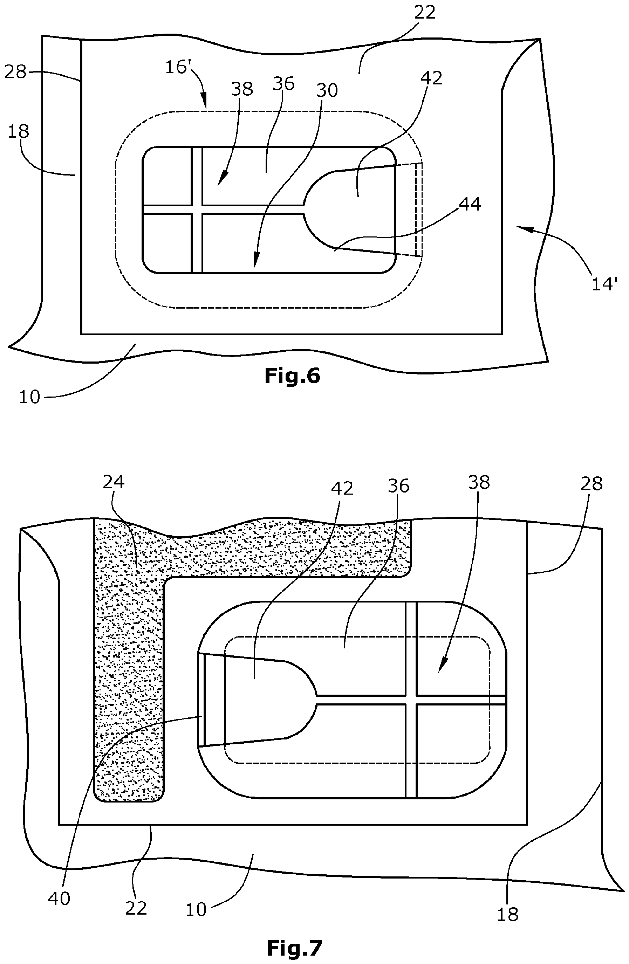

In den Fign. 6 bis 9 ist ein Ausführungsbeispiel eines Fixiervorsprungs 16' eines Schallisolationselements 14' gezeigt, bei dem die Seitenwand 30 vollständig um die Aussparung 27 der Trägerschicht 22 herum verläuft. Sofern die Elemente des Fixiervorsprungs 16' identisch sind zu den Elementen des Fixiervorsprungs 16 der Fign. 2 bis 4 bzw. diesen entsprechen, sind sie in den Fign. 6 bis 9 mit den gleichen Bezugszeichen wie in den Fign. 2 bis 5 gekennzeichnet.

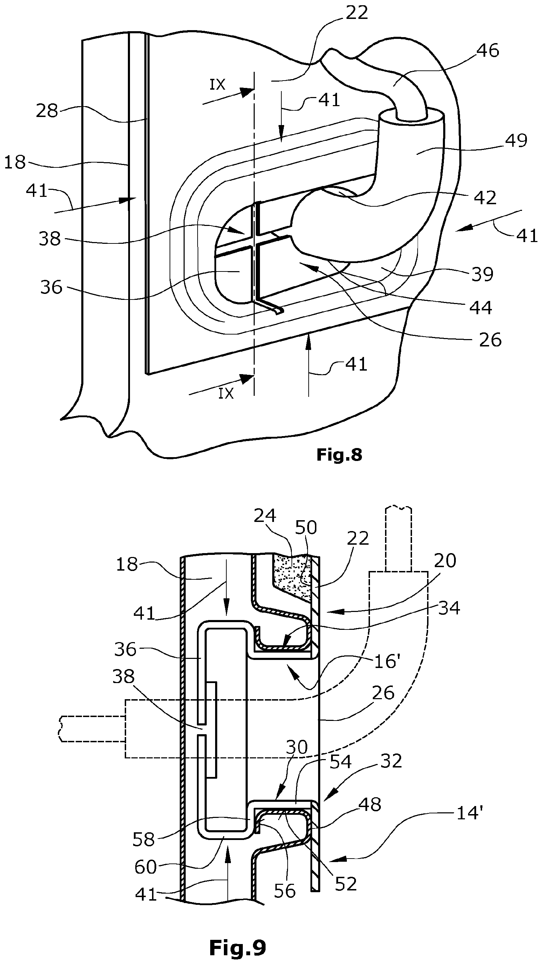

Damit der Fixiervorsprung 16' auf vergleichsweise einfache Art und Weise in eine Aufnahmeöffnung 26 der Fahrzeugkarosserie 10 einführbar ist, weist die Bodenwandöffnung 38 vorzugsweise eine Kreuzschlitz- bzw. Kreuzspalt-Struktur auf. Die Bodenwandöffnung 38 erstreckt sich wiederum bis in jeweils gegenüberliegende Abschnitte der Seitenwand 30, so dass der Fixiervorsprung 16' nun in zwei orthogonal zueinander verlaufenden Richtungen (siehe die Pfeile 41 in Fig. 8) zusammendrückbar ist. Bei dem Ausführungsbeispiel gemäß den Fign. 2 bis 5 ist eine derartige Unterbrechung der Seitenwand an mehreren gegenüberliegenden Stellen nicht erforderlich, da dort der Fixiervorsprung 16 zum Außenbegrenzungsrandabschnitt 28 hin offen ist.

### BEZUGSZEICHENLISTE

- 10: Fahrzeugkarosserie
- 12: Stirnwand
- 14: Schallisolationselement
- 14': Schallisolationselement
- 16: Fixiervorsprung
- 16': Fixiervorsprung
- 18: A-Säule
- 20: Masse-Feder-(Platten-)Element
- 22: Kunststoff-Trägerschicht des Masse-Feder-Elements
- 24: Schalldämpfungsschicht des Masse-Feder-Elements
- 26: Aufnahmeöffnung der Fahrzeugkarosserie
- 27: Aussparung in dem Masse-Feder-Element
- 28: Außenbegrenzungsrandabschnitt
- 30: Seitenwand des Fixiervorsprungs
- 32: Öffnungsrand der Aussparung
- 34: Außenaufnahmenut des Fixiervorsprungs
- 36: Bodenwand des Fixiervorsprungs
- 38: Bodenwandöffnung in der Bodenwand
- 39: gegenüberliegende Bereiche des Fixiervorsprungs
- 40: Freischnitt in der Seitenwand
- 41: Pfeile
- 42: Leitungsausnehmung
- 44: Ausnehmungsrand der Bodenwandöffnung
- 46: Leitung
- 48: Flanke der Außenaufnahmenut
- 49: Außenmanschette
- 50: Rückseite des Masse-Feder-Elements
- 52: Nutgrund der Außenaufnahmenut
- 54: erster Bereich der Seitenwand
- 56: Flanke der Außenaufnahmenut
- 58: nach außen verlaufender Abschnitt der Seitenwand
- 60: weiterer Abschnitt der Seitenwand

## Patentansprüche

1. Schallisolationselement für die Stirnwand einer Fahrzeugkarosserie, mit
- einem Masse-Feder-Element (20), das eine Kunststoff-Trägerschicht (22) mit einer im Einbauzustand des Masse-Feder-Elements (20) der Stirnwand (12) abgewandten Vorderseite sowie mit einer der Stirnwand (12) zugewandten Rückseite und einer mit der Rückseite der Kunststoff-Trägerschicht (22) verbundene Schalldämpfungsschicht (24) aus einem Schalldämpfungsmaterial,
- wobei die Trägerschicht (22) an ihrer Rückseite eine Aussparung (27) und einen integral ausgebildeten hohlen Fixiervorsprung (16,16') aufweist,
- wobei der Fixiervorsprung (16,16') eine Bodenwand (36) und eine von dieser aufragende Seitenwand (30) aufweist,
- wobei sich die Seitenwand (30) entlang der Aussparung (27) der Trägerschicht (22) erstreckt und eine Außenaufnahmenut (34) zur Aufnahme eines Öffnungsrandes (32) einer in der Fahrzeugkarosserie (10) ausgebildeten Aufnahmeöffnung für den Fixiervorsprung aufweist,
- wobei
- die Bodenwand (36) des Fixiervorsprungs (16,16') eine Bodenwandöffnung (38) aufweist, die sich bis in zumindest einen Teil von mindestens zwei gegenüberliegenden Abschnitten der Seitenwand (30) des Fixiervorsprungs (16,16') hinein erstreckt,
oder
- die Bodenwand (36) in der von ihr aufgespannten Ebene und die Seitenwand (30) des Fixiervorsprungs (16,16') in zumindest zwei gegenüberliegenden Abschnitten stauchbar ausgeführt sind,
- wobei die Bodenwand (36) des Fixiervorsprungs (16,16') eine Bodenwandöffnung (38) aufweist, die sich bis in zumindest zwei gegenüberliegende Abschnitte der Seitenwand (30) des Fixiervorsprungs (16,16') hinein erstreckt,
- wobei die Bodenwandöffnung (38) des Fixiervorsprungs (16,16') eine durch einen Ausnehmungsrand (44) begrenzte Leitungsausnehmung (42) zur Hindurchführung einer Leitung (46), insbesondere einer Hydraulik- und/oder einer elektrischen Leitung, durch das Masse-Feder-Element (20) definiert und
- wobei der Ausnehmungsrand (44) der Leitungsausnehmung (42) zur Anlage an einer Leitung (46) und damit zur Aufrechterhaltung der Form und Stabilisierung der Bodenwandöffnung (38) und deren Leitungsausnehmung (42) vorgesehen ist.

2. Schallisolationselement nach Anspruch 1, **dadurch gekennzeichnet, dass** der Ausnehmungsrand (44) der Leitungsausnehmung (42) in der Bodenwand (36) des Fixiervorsprungs (16,16') zwecks Scheuerschutz für eine Leitung (46) mit Schalldämpfungsmaterial versehen und insbesondere in Schalldämpfungsmaterial eingebettet ist.

3. Schallisolationselement nach Anspruch 1 oder 2, **dadurch gekennzeichnet, dass** die Bodenwand (36) des Fixiervorsprungs (16,16') eine Bodenwandöffnung (38) aufweist, die sich bis in zumindest zwei gegenüberliegende Abschnitte der Seitenwand (30) des Fixiervorsprungs (16,16') hinein erstreckt, und dass die Bodenwandöffnung (38) als Langloch, insbesondere als Schlitz oder Spalt ausgebildet ist.

4. Schallisolationselement nach einem der Ansprüche 1 bis 3, **dadurch gekennzeichnet, dass** die Seitenwand (30) des Fixiervorsprungs (16,16') zur Ausbildung der Außenaufnahmenut (34) S-förmig ist.

5. Schallisolationselement nach Anspruch 4, **dadurch gekennzeichnet,**
- **dass** die eine Flanke der Außenaufnahmenut (34) der Seitenwand (30) des Fixiervorsprungs (16,16') durch den an die Aussparung der Trägerschicht (22) angrenzenden Abschnitt der Rückseite der Trägerschicht (22) und/oder durch gegebenenfalls dort vorhandenes Schalldämpfungsmaterial gebildet ist,
- **dass** die Außenaufnahmenut (34) einen Nutgrund (52) aufweist, der von einem von der Rückseite der Trägerschicht (22) aufragenden ersten Bereich der Seitenwand (30) gebildet ist, und
- **dass** die der besagten einen Flanke gegenüberliegende andere Flanke der Außenaufnahmenut durch einen nach außen verlaufenden Abschnitt der Seitenwand (30) gebildet ist,
- wobei sich an diesen Abschnitt der Seitenwand (30) ein von diesem Abschnitt abstehender sowie von der Rückseite der Trägerschicht (22) weg gerichteter weiterer Abschnitt der Seitenwand (30) anschließt, der in die Bodenwand (36) des Fixiervorsprungs (16,16') übergeht.

6. Schallisolationselement nach einem der Ansprüche 1 bis 5, **dadurch gekennzeichnet, dass** die Bodenwand (36) des Fixiervorsprungs (16,16') eine Bodenwandöffnung (38) aufweist, die sich bis in mindestens drei versetzt zueinander angeordnete Abschnitte der Seitenwand (30) und insbesondere in vier um jeweils 90° zueinander versetzt angeordnete Abschnitte der Seitenwand (30) des Fixiervorsprungs (16,16') hinein erstreckt.

7. Schallisolationselement nach einem der Ansprüche 1 bis 6, **dadurch gekennzeichnet, dass** die Aussparung der Trägerschicht (22) des Feder-Masse-Elements (20) als zu einem Außenbegrenzungsrandabschnitt (28) der Trägerschicht (22) hin offenen Randaussparung mit einem Aussparungsrand ausgebildet ist, wobei die von der Rückseite der Trägerschicht (22) aufragende Seitenwand (30) an dem Außenbegrenzungsrandabschnitt (28) der Trägerschicht (22) endet.

8. Schallisolationselement nach Anspruch 7, **dadurch gekennzeichnet, dass** die Bodenwand (36) des Fixiervorsprungs (16,16') eine Bodenwandöffnung (38) aufweist, die sich von dem Außenbegrenzungsrandabschnitt (28) der Trägerschicht (22) bis in zumindest einen Teil des dem Außenbegrenzungsrandabschnitt (28) der Trägerschicht (22) im Wesentlichen gegenüberliegenden Abschnitt der Seitenwand (30) des Fixiervorsprungs (16,16') erstreckt.

9. Schallisolationselement nach Anspruch 7 oder 8, **dadurch gekennzeichnet, dass** die Seitenwand (30) des Fixiervorsprungs (16,16') in ihrem dem Außenbegrenzungsrandabschnitt (28) der Trägerschicht (22) im Wesentlichen gegenüberliegenden Abschnitt einen Freischnitt (eine Aussparung) (40) aufweist.

## Claims

1. Noise insulation element for the front wall of a vehicle body with
- a mass spring element (20) which has a plastic support layer (22) with a front side facing away from the front wall (12) when the mass spring element (20) is in an installed state, as well as with a rear side facing towards the front wall (12) and a noise damping layer (24) made from a noise damping material connected to the rear side of the plastic support layer (22),
- wherein the support layer (22) has a recess (27) on its rear side and an integrally designed hollow fixing projection (16, 16'),
- wherein the fixing projection (16, 16') has a bottom wall (36) and a side wall (30) rising up from the bottom wall,
- wherein the side wall (30) extends along the recess (27) of the support layer (22) and has an outer receiving groove (34) for receiving an opening edge (32) of a receiving opening formed in the vehicle body (10) for the fixing projection (16),
- wherein
- the bottom wall (36) of the fixing projection (16, 16') has a bottom wall opening (38) which extends into at least one part of at least two sections being opposite to each other of the side wall (30) of the fixing projection (16, 16'),
or
- the bottom wall (36) in the plane formed by the same and the side wall (30) of the fixing projection (16, 16') is designed to be compressible in at least two sections being opposite to each other,
- wherein the bottom wall (36) of the fixing projection (16, 16') has a bottom wall opening (38) which extends into at least two sections being opposite to each other of the side wall (30) of the fixing projection (16, 16'),
- wherein the bottom wall opening (38) of the fixing projection (16, 16') defines by the mass spring element (20) a line recess (42) being delimited by a recess edge (44) for the passage of a line (46), in particular a hydraulic and/or electric line and
- wherein the recess edge (44) of the line recess (42) is provided for being applied at a line (46) and therefore maintaining the form and stabilizing the bottom wall opening (38) and the line recesses (42) thereof.

2. Noise insulating element according to claim 1,
**characterized in that**
the recess edge (44) of the line recess (42) in the bottom wall (36) of the fixing projection (16, 16') is equipped with noise damping material for the sake of abrasion protection for a line (46) and is in particular embedded in noise damping material.

3. Noise insulating element according to claim 1 or 2,
**characterized in that**
the bottom wall (36) of the fixing projection (16, 16') has a bottom wall opening (38) which extends into at least two sections being opposite to each other of the side wall (30) of the fixing projection (16, 16'), and that the bottom wall opening (38) is designed as an oblong hole, in particular as a slot or a gap.

4. Noise insulating element according to one of the claims 1 to 3,
**characterized in that**
the side wall (30) of the fixing projection (16, 16') for forming the outer receiving groove (34) is S-shaped.

5. Noise insulating element according to claim 4,
**characterized in**
- **that** the one flank of the outer receiving groove (34) of the side wall (30) of the fixing projection (16, 16') is formed by that section of the rear side of the support layer (22) which is adjacent to the recess of the support layer (22) and/or by noise damping material possibly existing there,
- **that** the outer receiving groove (34) has a groove base (52) which is formed by a first area of the side wall (30) rising up from the rear side of the support layer (22), and
- **that** the other flank of the outer receiving groove which is opposite to the said flank, is formed by a section of the side wall (30) which runs outwardly,
- wherein this section of the side wall (30) is adjoined by a further section of the side wall (30) which is protruding from this (first mentioned) section and is facing away from the rear side of the support layer (22), which merges into the bottom wall (36) of the fixing projection (16, 16').

6. Noise insulating element according to one of the claims 1 to 5,
**characterized in that**
the bottom wall (36) of the fixing projection (16, 16') has a bottom wall opening (38) which extends into at least three sections of the side wall (30) being arranged offset to each other, and in particular into four sections of the side wall (30) of the fixing projection (16, 16') being arranged offset to each other by 90° respectively.

7. Noise insulating element according to one of the claims 1 to 6,
**characterized in that**
the recess of the support layer (22) of the spring mass element (20) is formed as an edge recess being open towards an outer limiting edge recess (28) of the support layer (22) with a recess edge, wherein the side wall (30) rising up from the rear side of the support layer (22) ends at the outer limiting edge recess (28) of the support layer (22).

8. Noise insulating element according to claim 7,
**characterized in that**
the bottom wall (36) of the fixing projection (16, 16') has a bottom wall opening (38) which extends from the outer limiting edge recess (28) of the support layer (22) up into the at least one part of the section of the side wall (30) which is substantially opposite to the outer limiting edge recess (28) of the support layer (22).

9. Noise insulating element according to claim 7 or 8,
**characterized in that**
the side wall (30) of the fixing projection (16, 16') has a cut out (a recess) (40) in its section lying substantially opposite to the outer limiting edge section (28) of the support layer (22).

## Revendications

1. Élément d'isolation acoustique pour la paroi frontale d'une carrosserie de véhicule, avec
- un élément masse-ressort (20) qui présente une couche de support en plastique (22) avec une face avant opposée à la paroi frontale (12) lorsque l'élément masse-ressort (20) est monté et avec une face arrière tournée vers la paroi frontale (12) et une couche insonorisante (24) constituée d'un matériau insonorisant et reliée à la face arrière de la couche de support en plastique (22),
- dans lequel la couche de support (22) présente un évidement (27) et une saillie de fixation creuse monobloc (16, 16') sur sa face arrière,
- dans lequel la saillie de fixation (16, 16') présente une paroi inférieure (36) et une paroi latérale (30) faisant saillie à partir de celle-ci,
- dans lequel la paroi latérale (30) s'étend le long de l'évidement (27) de la couche de support (22) et a une rainure de réception externe (34) pour recevoir un bord d'ouverture (32) d'une ouverture de réception formée dans la carrosserie du véhicule (10) pour la saillie de fixation,
- dans lequel
- la paroi inférieure (36) de la saillie de fixation (16, 16') présente une ouverture de paroi inférieure (38) qui s'étend dans au moins une partie d'au moins deux sections opposées de la paroi latérale (30) de la saillie de fixation (16, 16'),
ou
- la paroi inférieure (36) dans le plan qu'elle traverse et la paroi latérale (30) de la saillie de fixation (16, 16') sont conçues pour être compressibles en au moins deux sections opposées,
- dans lequel la paroi inférieure (36) de la saillie de fixation (16, 16') présente une ouverture de paroi inférieure (38) qui s'étend dans au moins deux sections opposées de la paroi latérale (30) de la saillie de fixation (16, 16'),
- dans lequel l'ouverture de paroi inférieure (38) de la saillie de fixation (16, 16') présente un évidement de conduite (42) délimité par un bord d'évidement (44) pour passer une conduite (46), en particulier une conduite hydraulique et/ou électrique, à travers l'élément masse-ressort (20) et
- dans lequel le bord d'évidement (44) de l'évidement de conduite (42) est destiné à reposer contre une conduite (46) et ainsi à maintenir la forme et à stabiliser l'ouverture de paroi inférieure (38) et son évidement de conduite (42).

2. Élément d'isolation acoustique selon la revendication 1,
**caractérisé en ce que**
le bord (44) de l'évidement de conduite (42) dans la paroi inférieure (36) de la saillie de fixation (16, 16 ') est pourvu d'un matériau insonorisant à des fins de protection contre l'abrasion pour une conduite (46) et en particulier est intégré dans un matériau d'insonorisation.

3. Élément d'isolation acoustique selon la revendication 1 ou 2,
**caractérisé en ce que**
la paroi inférieure (36) de la saillie de fixation (16, 16 ') a une ouverture de paroi inférieure (38) qui s'étend dans au moins deux sections opposées de la paroi latérale (30) de la saillie de fixation (16, 16'), et **en ce que** l'ouverture de paroi inférieure (38) est conçue comme un trou allongé, en particulier comme une fente ou un espace.

4. Élément d'isolation acoustique selon l'une des revendications 1 à 3,
**caractérisé en ce que**
la paroi latérale (30) de la saillie de fixation (16, 16 ') est en forme de S pour former la rainure de réception externe (34).

5. Élément d'isolation acoustique selon la revendication 4,
**caractérisé en ce que**
- le flanc de la rainure de réception externe (34) de la paroi latérale (30) de la saillie de fixation (16, 16') est formé par la section du côté arrière de la couche de support (22) contiguë à l'évidement dans le support couche (22) et/ou par tout matériau insonorisant présent,
- la rainure de réception externe (34) a une base de rainure (52) qui est formée par une première région de la paroi latérale (30) faisant saillie du côté arrière de la couche de support (22), et
- l'autre flanc de la rainure de réception externe opposé audit premier flanc est formé par une section s'étendant vers l'extérieur de la paroi latérale (30),
- dans lequel cette section de la paroi latérale (30) est suivie d'une autre section de la paroi latérale (30) qui fait saillie de cette section et est dirigée à l'opposé du côté arrière de la couche de support (22) et qui est insérée dans la paroi inférieure (36) de la saillie de fixation (16, 16').

6. Élément d'isolation acoustique selon l'une des revendications 1 à 5,
**caractérisé en ce que**
la paroi inférieure (36) de la saillie de fixation (16, 16') présente une ouverture de paroi inférieure (38) qui s'étend jusqu'à au moins trois sections du côté paroi (30) disposée décalées les unes par rapport aux autres et s'étend notamment en quatre sections de la paroi latérale (30) de la saillie de fixation (16, 16') disposées décalées l'une de l'autre de 90°.

7. Élément d'isolation acoustique selon l'une des revendications 1 à 6,
**caractérisé en ce que**
le renfoncement de la couche de support (22) de l'élément masse-ressort (20) est conçu comme un évidement de bord ouvert vers une partie de bordure extérieure (28) de la couche de support (22) avec un bord évidé, dans lequel la paroi latérale en saillie (30) du côté arrière de la couche de support (22) se termine au niveau de la partie de bord de délimitation externe (28) de la couche de support (22).

8. Élément d'isolation acoustique selon la revendication 7,
**caractérisé en ce que**
la paroi inférieure (36) de la saillie de fixation (16, 16') présente une ouverture de paroi inférieure (38) qui s'étend depuis la section de bord de délimitation externe (28) de la couche de support (22) dans au moins une partie de la section de bord de délimitation externe (28) de la couche de support (22) essentiellement à l'opposé de la section de la paroi latérale (30) de la saillie de fixation (16, 16').

9. Élément d'isolation acoustique selon la revendication 7 ou 8,
**caractérisé en ce que**
la paroi latérale (30) de la saillie de fixation (16, 16') présente une découpe (un évidement) (40) dans sa section sensiblement opposée à la section de bordure extérieure (28) de la couche de support (22).
